Europäisches Patentamt

European Patent Office

Office européen des brevets

(11) Veröffentlichungsnummer: **0 364 006**
**A1**

## (12) EUROPÄISCHE PATENTANMELDUNG

(21) Anmeldenummer: 89122210.1

(22) Anmeldetag: 23.04.86

(51) Int. Cl.⁵: **H02G 1/12**

(30) Priorität: 26.04.85 DE 3515223

(43) Veröffentlichungstag der Anmeldung:
**18.04.90 Patentblatt 90/16**

(60) Veröffentlichungsnummer der früheren
Anmeldung nach Art. 76 EPÜ: **0 200 995**

(84) Benannte Vertragsstaaten:
**BE CH DE FR GB IT LI**

(71) Anmelder: **Siemens Aktiengesellschaft**
**Wittelsbacherplatz 2**
**D-8000 München 2(DE)**

(72) Erfinder: **Putz, Wilhelm**
**Nordring 31**
**D-8550 Forchheim(DE)**

(54) **Vorrichtung zum Abisolieren von lackisolierten Runddrähten und deren Verwendung bei Wickelautomaten.**

(57) Zum Abisolieren sind außer rein manuellen Verfahren Handgeräte bekannt, die Werkzeuge aufweisen, die von einem gemeinsamen Antrieb mit Drehwelle und damit verbundenen Werkzeugträgern aktivierbar sind und um den Draht zur Abspanung rotieren. Dabei kann bereits die Drehwelle Schwenklager für die Werkzeugträger aufweisen, über welche die Werkzeuge auf den Drahtdurchmesser zugestellt werden, wobei auf der Welle ein axial verschiebbarer Verstellkonus angeordnet ist, der die schwenkbaren Werkzeugträger an ihren den Werkzeugen abgewandten Enden abstützt, und wobei eine Zustellmechanik für den Verstellkonus vorhanden ist. Erfindungsgemäß ist die Drehwelle (10) mit Verstellkonus (50) und die Zustellmechanik (55 bis 90) in einem Gehäuse (100) angeordnet, das gleichzeitig auch den Antrieb (110) aufnimmt, und weist das Gehäuse (100) einen Schlitten (130) auf, der gegen eine stationäre Vorrichtung, beispielsweise eine Wickelmaschine relativ verschiebbar ist. Vorzugsweise weist die Zustellmechanik (55 bis 90) einen Pneumatikzylinder auf, der mit seinem Druckelement (71) über eine Gabel auf den Verstellkonus (50) einwirkt und die radial zustellbaren Werkzeuge (35, 135, 145) in eine durch den Drahtdurchmesser vorbestimmte Position bringt. Eine solche Vorrichtung wird insbesondere zum Durchlaufabisolieren innerhalb einer automatisch arbeitenden Wickelmaschine verwendet. Aufgrund des kompakten Aufbaus können erfindungsgemäße Vorrichtungen in parallele Kanäle eines Wickelautomaten unmittelbar vor die zu wickelnden Spulen eingebaut werden.

FIG 2

EP 0 364 006 A1

## Vorrichtung zum Abisolieren von lackisolierten Runddrähten und deren Verwendung bei Wickelautomaten

Die Erfindung bezieht sich auf eine Vorrichtung zum Abisolieren von lackisolierten Rundrähten gemäß dem Oberbegriff des Patentanspruches 1. Daneben bezieht sich die Erfindung auch auf die Verwendung derartiger Vorrichtungen bei Wickelautomaten.

Aus der DE-PS 24 38 854 ist eine Vorrichtung zum Abisolieren elektrischer Leiter bekannt, die eine elektrisch angetriebene rotierende Welle aufweist mit mindestens zwei konzentrisch zur Wellenachse angeordneten und radial schwenkbaren Werkzeugträgern, deren vordere, zur Schaftachse hin schwenkbaren Hebelarme Abisolierwerkzeuge tragen und deren hintere Hebelarme Fliehgewichte aufweisen. Zusätzlich sind den jeweiligen Hebel in seiner Ruhestellung haltende Federmittel vorhanden, gegen deren Kraft die jeweils hinteren Hebelarme in Kulissen geführt werden, wodurch die Werkzeugträger in ihrer Schwenkbewegung miteinander gekoppelt und zwangsgeführt sind. Bei dieser Vorrichtung sollen sich die Werkzeuge durch die Rotation aufgrund der Fliehkraft an den Drahtdurchmesser anstellen, so daß durch überlagerte Rotation- und Längsbewegung der Werkzeuge gegenüber dem Draht dessen Abisolierung bewirkt wird.

Diese bekannte Vorrichtung dient als Handgerät zum Abisolieren von Leiterenden. Aufgrund des Konstruktionsprinzips mit Fliehkraftanstellung der Werkzeuge an den Drahtdurchmesser ist ein genau reproduzierbares Arbeiten mit diesem Gerät nicht immer gewährleistet. Insbesondere bei dünnen Leitern, beispielsweise unter 1 mm, ergeben sich dadurch mehr oder weniger zufällige Ergebnisse.

Daneben ist aus der DE-OS 19 33 065 eine Vorrichtung zum Abisolieren von Lackdrähten und Kunststoffaderleitungen bekannt, bei der ein Schneidkopf als Werkzeugträger für mindestens fünf Drehstahlsegmente über ein Außengewinde relativ zu einem zylindrischen Außenteil mit innenliegender konischer Ringfläche verschraubt werden kann. Die federnd gelagerten Werkzeuge sitzen rückseitig mit einem Kugelkopf auf der Ringfläche auf und können durch Hineinoder Herausschrauben des Schneidkopfes radial auf unterschiedliche Bearbeitungsdurchmesser eingestellt werden.

Letztere Vorrichtung ist als stationäres Gerät vorgesehen und erlaubt nur das Abisolieren vergleichsweise dicker Drähte durch Einschieben. Dazu müssen die Drähte eine gewisse Eigensteifigkeit aufweisen, um beim Einschieben bei gleichzeitiger Rotation der radial eingestellten Werkzeuge deren Drehmomente aufnehmen zu können.

Aufgabe der Erfindung ist es demgegenüber, eine Vorrichtung anzugeben, die kompakt und vielseitig einsetzbar ist und die ein Abisolieren von flexiblen Runddrähten mit Durchmessern auch unterhalb von 1 mm ermöglicht.

Die Aufgabe ist erfindungsgemäß durch die Gesamtheit der Merkmale des Patentanspruches 1 gelöst. Vorteilhafte Weiterbildungen und Einsatzmöglichkeiten sind in den Unteransprüchen und insbesondere in den Verwendungsansprüchen angegeben.

Bei der Erfindung lassen sich die Werkzeugträger mit den Werkzeugen durch Verschiebung des Verstellkonus definiert zusammen bewegen. Vorzugsweise weist die zustellmechanik einen Pneumatikzylinder auf, der die radial zustellbaren Werkzeuge in eine vorbestimmbare Position bringt. Damit ist es möglich, die Werkzeuge exakt und reproduzierbar auf den Drahtdurchmesser zuzustellen.

Die schwenkbaren Werkzeugträger können sich somit bei Rotation der Werkzeuge in einer arbeitsfreien Position befinden und dann gezielt zum Abisolieren verschwenkt werden. Der eigentliche Abisoliervorgang kann dadurch bei Verschiebung des Schlittens längs der Drahtachse erfolgen. Damit ist ein Abisolieren definierter Bereiche eines ruhenden Drahtes möglich, was nunmehr unmittelbar vor einer zu wickelnden Spule in einem Wickelautomaten erfolgen kann.

Untersuchungen haben ergeben, daß mit einer erfindungsgemäßen Vorrichtung Runddrähte bis zu einem Durchmesser von 0,2 mm bearbeitet werden können. Dabei ist eine Zustellbarkeit mit einer Genauigkeit von ± 2 μm möglich.

Eine Vorrichtung nach der Erfindung läßt sich äußerst kompakt aufbauen. Insbesondere kann eine derartige Vorrichtung in eine automatisch arbeitende Wickelmaschine integriert werden, wobei aufgrund der geringen Abmessung der erfindungsgemäßen Vorrichtung jeder Bearbeitungsstation der Wickelmaschine eine Abisoliervorrichtung zugeordnet werden kann.

Bei der erfindungsgemäßen Vorrichtung können als Werkzeuge drei austauschbare Messer vorhanden sein, die schräg zur Drahtachse angeordnet sind und sich gegenseitig überlappen. Es können aber auch vier austauschbare Messer vorhanden sein, die gegeneinander rechtwinklig in gleicher Ebene der Drahtachse angeordnet sind. Es hat sich gezeigt, daß durch Optimierung von Schneidenform, -werkstoff und Schnittgeschwindigkeit somit auch dünne Drähte bis zu 0,2 mm Durchmesser mit hoher Genauigkeit bearbeitet werden können.

In vorteilhafter Weiterbildung der Erfindung kann eine Absaugeinrichtung am Gehäuse der Vorrichtung angeordnet sein, so daß die abgespanten Späne an der Bearbeitungsstelle abgesaugt werden können; gleichermaßen kann durch Anordnung von Saugkanälen die Absaugluft zum Kühlen des gesamten Systems aus Antriebsund zugehöriger Verstellmechanik verwendet werden. Damit werden störende thermische Effekte völlig ausgeschaltet.

Weitere Einzelheiten und Vorteil der Erfindung ergeben sich aus der nachfolgenden Figurenbeschreibung von Ausführungsbeispielen anhand der Zeichnung. Es zeigen

FIG 1 den schematischen Aufbau einer Vorrichtung, die mit ihren wesentlichen Merkmalen vom Stand der Technik vorbekannt ist,

FIG 2 einen Schnitt durch eine erfindungsgemäß ausgebildete Vorrichtung,

FIG 3 und FIG 5 zwei verschiedene Messeranordnungen in der Draufsicht, die

FIG 4 und FIG 6 Schnittdarstellungen entsprechend den Linien IV-IV bzw. VI-VI der FIG 3 und FIG 5 und die

FIG 7 und FIG 8 zwei zueinander senkrechte Ansichten eines Wickelautomaten mit mehreren Vorrichtungen gemäß FIG 2.

In den Figuren sind identische Teile mit den gleichen Bezugzeichen versehen. Die Figuren werden teilweise zusammen beschrieben.

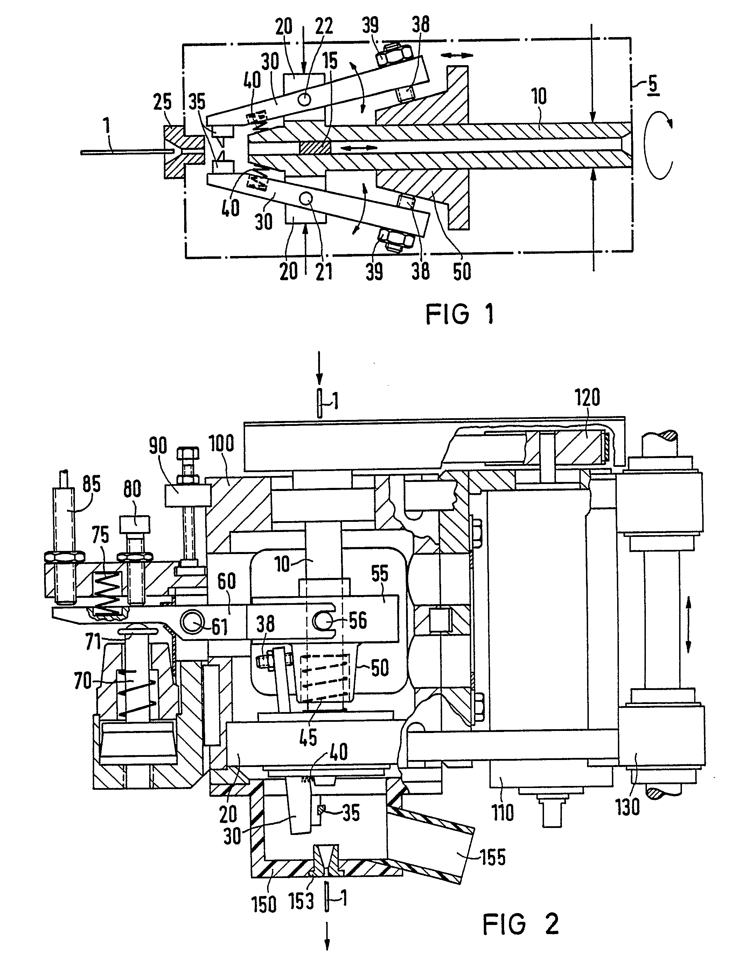

In FIG 1 ist eine schematisch dargestellte Absoliervorrichtung für einen lackisolierten Draht 1 mit 5 bezeichnet. Sie besteht im wesentlichen aus einer Drehwelle 10, die bei den Pfeilmarkierungen gelagert und an einen nicht im einzelnen dargestellten Antrieb angekoppelt ist. Insbesondere kann der Antrieb als Druckluftmotor in fluchtender Linie mit der Welle 10 ausgebildet sein. Im vorderen Bereich weist die Welle 10 einen ring förmigen Ansatz 20 auf. Am Ansatzring 20 werden azimutal um den Umfang verteilt mehrere Lager gebildet, von denen zwei Lager 21 und 22 erkennbar sind. In den Lagern 21 und 22 sind hebelförmige Werkzeugträger 30 schwenkbar befestigt. Die Werkzeugträger 30 weisen am vorderen Ende als Werkzeuge 35 Messer auf, die aus Grundkörpern und darin eingelassenen Schneiden bestehen. An ihren den Messern 35 abgewandten Enden haben die Werkzeugträger 30 je einen Gewindestift 38 als Gegenlager, welcher mittels einer Stellmutter 39 in Querrichtung zum Werkzeugträger 30 einstellbar ist. Zum Messer 35 hin werden die Werkzeugträger 30 durch Federn 40 gehalten.

Auf der Welle 10 ist in der Höhe des rückwärtigen Endes der Werkzeugträger 30 ein gegenüber der Hohlwelle 10 axial verschiebbarer Verstellkonus 50 angeordnet. Die Gewindestifte 38 der Werkzeugträger liegen auf der Kegelfläche des Verstellkonus 50 auf und werden dadurch abgestützt. Die axiale Lage des Verstellkonus definiert dabei die Schwenklage der Werkzeugträger 30 und damit den radialen Abstand der Werkzeuge 35 zum abzuisolierenden Draht. Auch bei schneller Rotation der Drehwelle 10 haben also die Werkzeugträger 30 mit den Messern 35 eine definierte Lage, welche jeweils durch die axiale Einstellung des Verstellkonus 50 bestimmt ist.

In FIG 1 ist die Drehwelle 10 speziell als Hohlwelle ausgebildet, so daß der Runddraht 1 durch das innere Lumen entweder hindurchlaufen oder zumindest in das Lumen eintauchen kann. Speziell zum Abisolieren von Drahtenden vorgegebener Länge ist in der Hohlwelle 10 ein Schaltelement 15 angeordnet, mit dem die Verschiebung von Verstellkonus und die Aktivierung des Antriebes ausgelöst werden kann. Weiterhin ist eine Einführhilfe 25 axial zur Abisoliervorrichtung 5 angebracht, mit der der Draht 1 zentrisch zwischen die Messer 35 hindurchgeschoben werden kann.

In FIG 1 ist der Verstellkonus 50 in seiner Betriebslage dargestellt, so daß die Messer 35 auf den Drahtdurchmesser zugestellt sind. Wird dagegen der Verstellkonus 50 verschoben, liegen die Gewindestifte 38 der Messersträger 30 am kleineren Durchmesserbereich des Verstellkonus 50 auf, so daß die Messer 35 vom Drahtdurchmesser abgehoben sind und einen Freiraum für das Einschieben eines Drahtes lassen. Der Draht kann dann manuell oder mit einer mechanischen Führungsvorrichtung eingeschoben werden, wobei er bei Eindringen in das innere Lumen der Welle 10 bei Erreichen einer vorgegebenen Tiefe den Schalter 15 betätigt. Damit wird eine Verschiebung des Verstellkonus 50 in die dargestellte Endlage ausgelöst, wobei hier die Gewindestifte 38 der Werkzeugträger 30 am großen Durchmesserbereich des Verstellkonus 50 abgestützt sind. In dieser Position bewirken die um den Draht rotierenden Messer 35 ein Abspanen der Isolationsschicht, wobei die weiterhin notwendige Relativbewegung von Draht 1 und Messer 35 entweder durch den Drahtvorlauf und/oder des Wickelgutes oder durch eine zugehörige Führungsvorrichtung erfolgt.

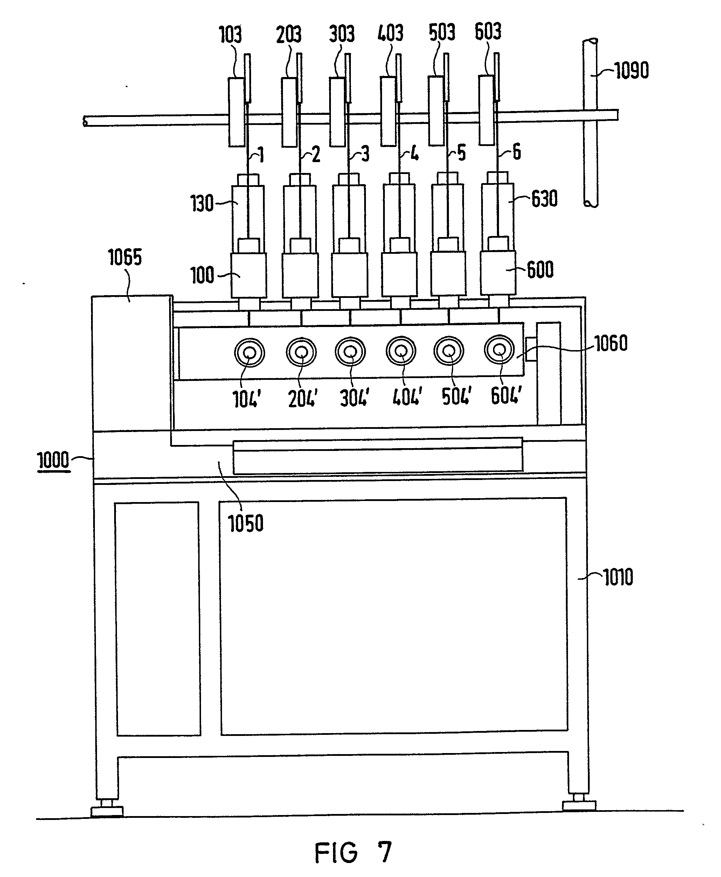

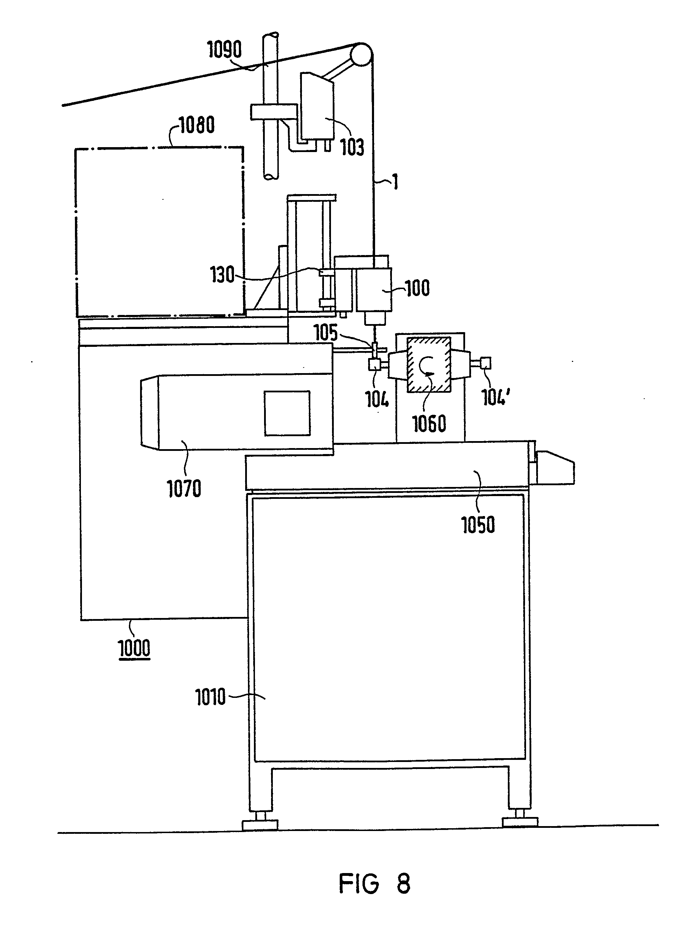

In FIG 2 ist eine derartige Vorrichtung für das Durchlaufabisolieren von Drähten dargestellt und wird als solche in einen Wickelautomaten integriert, was anhand der Figuren 7 und 8 weiter unten beschrieben wird. Mit 100 ist ein Gehäuse bezeichnet, in welchem die oben bereits beschriebene Anordnung aus als Hohlwelle ausgebildete Drehwelle 10 und Verstellkonus 50 zweifach gelagert ist. Weiterhin sind im Gehäuse 100 das zugehörige Antriebs- und Einstellmittel vorhanden. Parallel zur Drehwelle 10 liegt ein Elektromotor 110, von dem die Rotationsbewegung über einen Zahnriementrieb 120 auf die Drehwelle 10 übertragen wird. Unterhalb des Motors befindet sich eine Schlittenführung 130 über die das gesamte Gehäuse 100 durch nichtdargestellte Antriebsmittel in Richtung des Doppelpfeils bewegt werden kann.

Aus FIG 2 ist ersichtlich, daß der Verstellkonus 50 an seiner breitesten Stelle einen Ansatz 55 mit Zapfen 56 aufweist. Auf dem Zapfen 56 ist eine Gabel 60 aufgesteckt, die um einen bezüglich des Gehäuses 100 festen Drehpunkt 61 kippbar gelagert ist. Durch Hebelwirkung kann die Gabel 60 betätigt und damit der Verstellkonus 50 bewegt werden. Zur Aktivierung wird ein Pneumatikzylinder 70 mit einem Druckelement 71 verwendet, das auf dem dem Verstellkonus 50 abgewandten Teil der Gabel 60 aufliegt. Gegenüber befindet sich auf der Rückseite der Gabel 60 eine Anschlagschraube 80 als Gegendruckelement für den Pneumatikzylinder 70 sowie ein Schalter 85. Weiterhin ist eine Schraubenfeder 75 vorhanden, die bei Abschaltung des Pneumatikzylinders 70 die Gabel 60 in die Ausgangsposition zurückbewegt.

Entsprechend FIG 1 weist die Hohlwelle 10 im vorderen Teil einen Lagerbund 20 auf, der als Befestigungs- und Drehpunkt für die Werkzeugträger 30 dient. Der Übersichtlichkeit wegen ist lediglich einer von den Werkzeugträgern 30 dargestellt, welcher entsprechend FIG 1 mit angedeutetem Messer als Werkzeug 35 aufgebaut ist und durch den Verstellkonus 50 abgestützt wird. Auf der anderen Seite des Drehpunktes hält eine Druckfeder 40 den Werkzeugträger 30 in der durch den Verstellkonus 50 vorgegebenen Lage, wobei innerhalb des Verstellkonus 50 eine weitere Druckfeder 45 zu dessen Fixierung vorhanden ist.

Durch die beschriebene mechanische Anordnung ist es möglich, den Verstellkonus 50 mittels einer Verstellschraube 90 in eine definierte Lage relativ zur Hohlwelle 10 einzujustieren. Nach Einstellung auf den Drahtdurchmesser wird durch den Pneumatikzylinder 70 nach Ausfahren des Druckelementes 71 diese definierte Lage angestellt, wobei gleichzeitig der Drehantrieb betätigt ist.

Die Vorrichtung gemäß FIG 2 dient speziell zum Durchlaufabisolieren bei automatisch arbeitenden Wickelmaschinen, bei der im Ruhezustand der Werkzeuge 35 der isolierte Runddraht 1 zentrisch durch die bei dieser Ausführungsform zwingend vorhandene Hohlwelle 10 hindurchführbar und beispielsweise auf einen (nicht dargestellten) Spulenkörper aufwickelbar ist. Nur bestimmte Bereiche des Runddrahtes 1, die jeweils einen End- bzw. Anfangsbereich einer Spule bilden, sollen abisoliert werden. Dazu können bei durchlaufendem Draht 1 in beschriebener Weise der Verstellkonus 50 verschoben und die Werkzeuge 35 aktiviert werden. Bei stillstehendem Draht kann die erforderliche Relativbewegung zwischen Draht und Werkzeugen auch durch die Verschiebung des Gehäuses 100 über den Schlitten 130 erfolgen, was beispielsweise durch den Schalter 85 steuerbar ist.

Durch die Ausbildung der Vorrichtung mit Schlitten 130 und zugehörigem Verschiebeantrieb läßt sich also der abzuisolierende Bereich des Drahtes 1 genau vorgeben. Beim Betrieb dieser Vorrichtung zum Durchlaufabisolieren kann dabei nach dem Wickeln der zuletzt durch die Hohlwelle 10 laufende Drahtabschnitt abisoliert und der abisolierte Draht 1 nach dem abschließenden Nachwickeln an der Wickelspule durchtrennt werden. Damit sind gleichermaßen Drahtende einer fertig gewickelten Spule und Drahtanfang für eine folgende Spule abisoliert.

In FIG 2 ist am Gehäuse um den Werkzeugbereich herum eine weitgehend geschlossene Kappe 150 angeordnet, die einen Anschluß 155 zu einer nicht dargestellten Absaugeinrichtung aufweist. Die Kappe 150 kann aus Kunststoff oder dergleichen bestehen und weist eine Öffnung 153 für den Durchlauf des Wickeldrahtes 1 auf.

Durch den Anschluß des Gehäuses 100 mit Kappe 150 an eine Absaugeinrichtung läßt sich der beim Abisolieren entstehende feinspanige Abrieb direkt entfernen. Dabei ist das Gehäuse 100 mit entsprechenden Luftzuführungswegen vorteilhaft derart ausgebildet, daß durch die Absaugluft sowohl der Motor 110 sowie auch die gesamte Verstellmechanik und die Werkzeuge gekühlt werden. Dies ist deshalb von Bedeutung, da somit thermische Effekte ausgeschlossen und damit eine Langzeitstabilität bei der Bearbeitung von dünnen Runddrähten gewährleistet werden können.

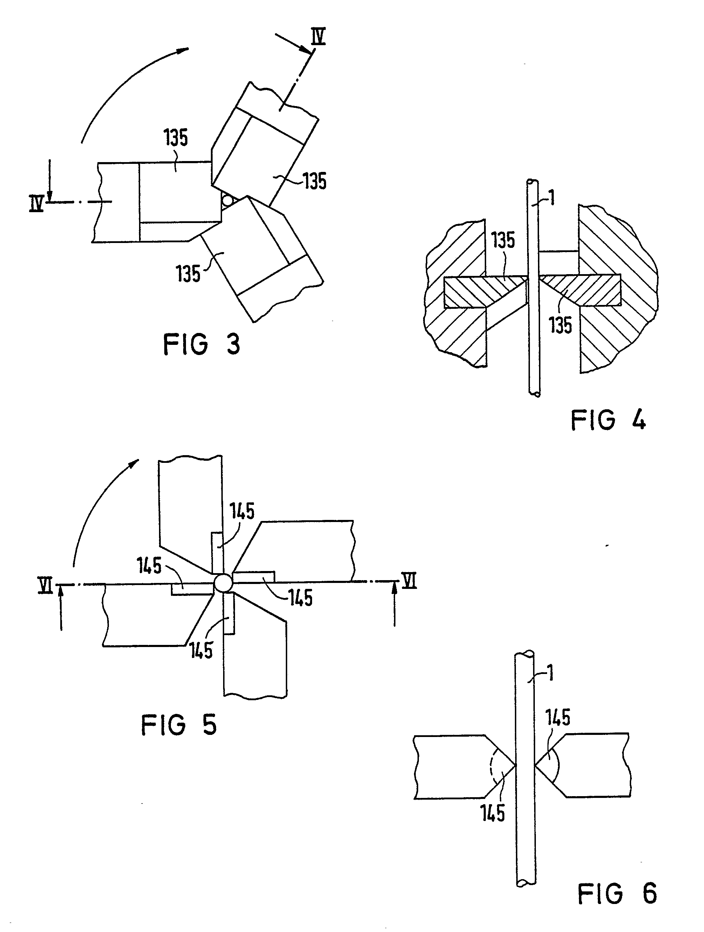

In FIG 3 sind drei Messer mit 135 bezeichnet, die mit ihren Schneiden derart schräg zur Drahtachse angeordnet sind, daß sie sich einerseits überlappen und daß andererseits die Schneidkante jeweils auf den Drahtumfang einwirkt. Bei dieser Konstruktion ist gewährleistet, daß die Messer 135 mit hoher Präzision auch bei geringem Drahtdurchmesser definiert zugestellt und um den Draht rotieren können. Es ist somit möglich, auch dünne Drähte bis zu einem Mindestdurchmesser von 0,2 mm mit einer Genauigkeit von einigen µm zu bearbeiten. Aus der Schnittdarstellung nach FIG 4 wird die Stellung der Messer 135 bezüglich des Runddrahtes noch deutlicher.

In FIG 5 sind vier Messer mit 145 bezeichnet. Die Messer 145 liegen hier in einer axialen Ebene des Drahtes und stehen zueinander rechtwinklig. Jeweils mit der Schneidenspitze greifen sie an den Außendurchmesser des Drahtes an und bewirken durch die Rotation den Abspanvorgang. Letzteres wird aus der Schnittdarstellung nach FIG 6 deutlich.

Bei den Messeranordnungen gemäß den vorangehenden Figuren wird jeweils ein Einzelmesser durch einen Grundkörper aus Stahl mit einer Schneide aus Diamant gebildet, wobei das Gesamtmesser austauschbar an Werkzeugträger befestigt ist. Die Schneidenform kann für verschiedene Anwendungen variiert und auf den jeweiligen Anwendungsfall optimiert werden. Die Anordnung aus drei schräg versetzten Messern ist hinsichtlich der Konstruktion und Einhaltung der Maßgenauigkeit vergleichsweise aufwendig. Es lassen sich aber damit Drähte mit sehr geringem Durchmesser bearbeiten. Bei größerem Durchmesser wird dagegen eine Anordnung mit vier Messern gemäß FIG 5 gewählt.

Die beschriebene Vorrichtung ist insbesondere für das Durchlaufabisolieren von Drähten geringen Durchmessers geeignet. Aufgrund des kompakten Aufbaus der Gesamtvorrichtung können in vorteilhafter Weise mehrere Einzelvorrichtungen mit Gehäuse in parallele Kanäle eines Wickelautomaten integriert werden. Letzteres wird anhand der Figuren 7 und 8 erläutert.

In FIG 7 und FIG 8 ist ein Wickelautomat mit 1000 bezeichnet, welcher aus einem Chassis 1010 mit Pneumatikeinheiten und diversen elektronischen Steuereinheiten einschließlich Display und Eingabetastatur besteht. Ein derartiger Wickelautomat ist vom Stand der Technik bekannt, so daß hierauf nicht im einzelnen eingegangen wird. Auf dem Chassis 1010 befindet sich eine Konsole 1050, die Träger eines schwenkbaren Revolverkopfes 1060 mit Schwenkantrieb 1065 ist. Am Revolverkopf 1060 können im lateralen Abstand mehrere Spulenkerne, beispielsweise in zwei Reihen je sechs Spulenkerne 104, 204, ..., 604, bzw. 104', 204', ...., 604', angeordnet sein, auf die über je eine Drahtführung 105, 205, ..., 605 dünne lackisolierte Drähte gewickelt werden sollen. Dabei besteht das Problem, jeweils Anfang und Ende der Wickeldrähte abzuisolieren und mit den zugehörigen Kontaktstiften der Spule zu kontaktieren.

Durch Einsatz der anhand FIG 2 beschriebenen Vorrichtung zum Durchlaufabisolieren beim Wickelautomaten 1000 ist es nunmehr möglich, den Wickeldraht so zu bearbeiten, daß die abisolierte Stelle positionsgenau am gewünschten Ort der Spule zu liegen kommt. Dies ist aus FIG 8 speziell für einen Kanal erkennbar.

Es bedeutet hier 100 das Gehäuse der Abisoliervorrichtung gemäß FIG 2, die über den Schlitten 130 relativ verschiebbar zur Konsole 1050 angeordnet ist. Der Wickeldraht 1 wird von einer (nicht dargestellten Vorratsrolle) über eine Drahtbremse 103 durch das Gehäuse 100 geführt und gelangt von dort über die Drahtführung 105 auf die Spule 104, welche am schwenkbaren Revolverkopf 1060 mit Schwenkantrieb 1065 angeordnet ist. Auf der anderen Seite des Revolverkopfes 1060 ist der zugehörige Spulenkern 104' zum Wechselbetrieb bei laufendem Wickelautomaten 1000 angedeutet. Weiterhin ist ein gemeinsamer motorischer Antrieb 1070 für alle Drahtführungen sowie eine gemeinsame Versorgungseinheit 1080 für alle Abisoliervorrichtungen vorhanden, welche jeweils synchron arbeiten.

Aus der Darstellung nach FIG 7 ist ersichtlich, daß der Konsole 1050 sechs Gehäuse 100, 200, ..., 600 mit Durchlaufabisoliervorrichtungen zugeordnet sind. An einem Gestell 1090 ist jeweils die zugehörige Drahtbremse 103, 203, ..., 603 im geeigneten Abstand angebracht, über die je ein Wickeldraht 1, 2, ., 6 durch die Durchlaufabisoliervorrichtungen auf die zu wickelnden Spulen 104, 204, ..., 604 läuft.

Bei der beschriebenen Anordnung wird das Abisolieren vorteilhaft unmittelbar vor der zu wickelnden Spule durchgeführt, wobei die Relativverschiebung der Werkzeuge entlang des Drahtes über die synchrone Bewegung der Schlitten 130, 230, ..., 630 erzeugt wird. Dadurch erfolgt nunmehr das Wickeln positionsgenau, wodurch das jeweilige Kontaktieren des abisolierten Drahtes vor bzw. nach dem Wickelvorgang vereinfacht wird. Zwangsläufige Ungenauigkeiten, die beim Stand der Technik wegen des vergleichsweise längeren Weges zwischen Abisolierung des Drahtes und dem Kontaktierungsort nicht zu verhindern waren, können nicht mehr auftreten. Dadurch kann das Kontaktieren erstmalig automatisch, d.h. ohne manuelle Hilfe, erfolgen.

## Ansprüche

1. Vorrichtung zum Abisolieren von lackisolierten Runddrähten mit wenigstens drei, von einem gemeinsamen Antrieb mit Drehwelle und damit verbundenen Werkzeugträgern aktivierbaren und um den Draht rotierenden spanabhebenden Werkzeugen, wobei die Drehwelle Schwenklager für die Werkzeugträger aufweist, über welche die Werkzeuge auf den Drahtdurchmesser zugestellt werden können, und wobei auf der Welle ein axial verschiebbarer Verstellkonus angeordnet ist, der die schwenkbaren Werkzeugträger an ihren den Werkzeugen abgewandten Enden abstützt, und wobei eine Zustellmechanik für den Verstellkonus vorhanden ist, **dadurch gekennzeichnet,** daß die Drehwelle (10) mit Verstellkonus (50) und die Zustellmechanik (55 bis 90) in einem Gehäuse (100) angeordnet sind, das gleichzeitig auch den Antrieb (110) aufnimmt, und daß das Gehäuse (100) einen Schlitten (130) aufweist, der gegen eine stationäre Vorrichtung, beispielsweise eine Wickelmaschine, relativ verschiebbar ist.

2. Vorrichtung nach Anspruch 1, **dadurch gekennzeichnet,** daß die Zustellmechanik (55 bis 90) einen Pneumatikzylinder (70) aufweist, der mit seinem Druckelement (71) über eine Gabel (60) auf den Verstellkonus (50) einwirkt.

3. Vorrichtung nach Anspruch 2, **dadurch ge-**

kennzeichnet, daß Federelemente (45, 75) zur Rückbewegung der Zustellmechanik (55 - 90) in die Ausgangslage nach Abschalten des Pneumatikzylinders (70) vorhanden sind.

4. Vorrichtung nach Anspruch 3, **dadurch gekennzeichnet,** daß Stellmittel (90) zum Einjustieren der Werkzeuge (35) auf einen Drahtdurchmesser zwischen 0,2 und 1 mm vorhanden sind.

5. Vorrichtung nach Anspruch 1, **dadurch gekennzeichnet,** daß die Drehwelle (10) als Hohlwelle ausgebildet ist.

6. Vorrichtung nach Anspruch 1 und 6, **dadurch gekennzeichnet,** daß sich an der Stirnfläche der Welle (10) bzw. in der Hohlwelle rückwärts versetzt ein Sensor, beispielsweise ein berührungsloser Schalter (15), befindet.

7. Vorrichtung nach Anspruch 1, **dadurch gekennzeichnet,** daß als Werkzeuge drei austauschbare Messer (135) vorhanden sind, die schräg zur Drahtachse angeordnet sind und sich gegenseitig überlappen.

8. Vorrichtung nach Anspruch 1, **dadurch gekennzeichnet,** daß als Werkzeuge vier austauschbare Messer (145) vorhanden sind, die zueinander rechtwinkelig in gleicher Ebene der Drahtachse angeordnet sind.

9. Vorrichtung nach einem der vorhergehenden Ansprüche, **dadurch gekennzeichnet,** daß das Gehäuse (100) über eine Kappe (150) mit Anschlußstutzen (155) mit einer Absaugeinrichtung verbunden ist.

10. Vorrichtung nach Anspruch 9, **dadurch gekennzeichnet,** daß im Gehäuse (100) Lüftungskanäle gebildet werden, wodurch die Absaugeinrichtung gleichermaßen Antriebsmotor (110), Welle (10) mit Verstellkonus (50) und Werkzeugträgern (30), einschließlich Zustellmechanik (55- 90), kühlt.

11. Verwendung einer Vorrichtung zum Abisolieren von lackisolierten Runddrähten nach Anspruch 1 oder einem der Ansprüche 2 bis 10 bei einem Wickelautomaten zum Wickeln von Spulen, **dadurch gekennzeichnet,** daß mehrere Gehäuse (100, 200, ..., 600) lateral im Abstand nebeneinander auf einer Konsole (1050) eines Wickelautomaten (1000) angeordnet sind.

12. Verwendung nach Anspruch 10, **dadurch gekennzeichnet,** daß jedes Gehäuse (100, 200, ..., 600) unmittelbar vor der zu wickelnden Spule (104, 204, ..., 604) angeordnet ist und mittels des zugehörigen Schlittens (130, 230, ..., 630) relativ zur Spule (104, 204, ..., 604) bewegbar ist.

'3145 E 01

FIG 1

FIG 2

3145 E 01

**FIG 3**

135

135

135

**FIG 4**

135

135

1

**FIG 5**

145

145

145

145

**FIG 6**

1

145

145

P 3145 E 01

FIG 7

P 3145 E 01

FIG 8

Europäisches Patentamt

**EUROPÄISCHER RECHERCHENBERICHT**

Nummer der Anmeldung

EP 89 12 2210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4 ) |
|---|---|---|---|
| A | US-A-4352305 (GENERAL ELECTRIC) <br> * Spalte 2, Zeilen 61 - 65 * <br> * Spalte 5, Zeile 57 - Spalte 11, Zeile 46; Figuren 1-10 * <br> ---- | 1-5, 8, 9, 11 | H02G1/12 |
| A | DE-A-2817727 (RITTMEYER) <br> * Seite 6, Absatz 2 - Seite 10, Absatz 1; Figur 1 * <br> --- | 1, 4-6 | |
| A | US-A-2671363 (WELLS) <br> * Spalte 2, Zeile 10 - Spalte 8, Zeile 60; Figur 1 * <br> --- | 1-4, 6 | |
| A | US-A-1784298 (MAHAN) <br> * Seite 2, Zeile 7 - Seite 4, Zeile 67; Figuren 1-8 * <br> --- | 1-5, 7 | |
| A | BE-A-506204 (BELL TELEPHONE) <br> * Seite 2, Zeile 42 - Seite 4, Zeile 36; Figuren 1-3 * <br> ----- | 1, 3, 8 | |

**RECHERCHIERTE SACHGEBIETE (Int. Cl.4 )**

H02G

Der vorliegende Recherchenbericht wurde für alle Patentansprüche erstellt

| Recherchenort | Abschlußdatum der Recherche | Prüfer |
|---|---|---|
| DEN HAAG | 07 FEBRUAR 1990 | DEMOLDER J. |